# EUROPEAN PATENT APPLICATION

(11) **EP 2 236 348 A2**
(43) Date of publication of application: **06.10.2010**
(21) Application number: 10157178.4
(22) Date of filing: 22.03.2010
(51) Int. Cl.: B60N 2/225

(54) **Seat reclining apparatus**

(30) Priority: 31.03.2009 JP 2009085538
(71) Applicant: AISIN SEIKI KABUSHIKI KAISHA, Kariya-shi, Aichi-ken 448-8650 (JP)
(72) Inventor: Kitano, Takashi, KARIYA-SHI, AICHI-KEN 448-8650 (JP); Watariguchi, Mitsutoshi, KARIYA-SHI, AICHI-KEN 448-8650 (JP); Morimoto, Hiroki, KARIYA-SHI, AICHI-KEN 448-8605 (JP)
(74) Representative: Intes, Didier Gérard André

(57) **Abstract**

A seat reclining apparatus includes a support frame (13) tiltable about a support axis (X) relative to a first frame (1), an angle adjustment unit (C) causing a second frame (2) to tiltably move forward or rearward relative to the support frame by a driving force of an actuator (M), the second frame (2) being displaced in a direction to approach and separate from the support axis (X), a lock mechanism (L) selectively operated to an unlocked state and a locked state, and a front stopper (31) provided at the first frame (1) to specify a forward tilt limit of the seat back (B) by making contact with a forward tilt contact portion (2S) provided at the second frame (2) in a state where the lock mechanism (L) is in the unlocked state, the front stopper (31) including a linearly-shaped contact surface (31 S) that makes contact with the forward tilt contact portion (2S) and that matches or approximates a virtual straight line (V) passing through the support axis (X).

## Description

### TECHNICAL FIELD

This disclosure relates to a seat reclining apparatus.

### BACKGROUND DISCUSSION

A known seat reclining apparatus includes a mechanism for adjusting a tilt angle of a seat back relative to a seat base by means of a driving force of an actuator and a stopper structure for determining a tilt limit of the seat back when a locked state between the seat back and the seat base is released. Such seat reclining apparatus is disclosed in JP61-48311A (hereinafter referred to as Reference 1). A reclining apparatus disclosed in Reference 1 includes a base provided at a seat cushion, an arm provided at a seat back so as to be rotatably connected to each other, and a sub plate arranged at a position where the sub plate is sandwiched between the base and the arm. The reclining apparatus further includes a lock mechanism of a planetary gear type between the sub plate and the arm. A sun gear included in the lock mechanism is manually operated so as to achieve a stepless reclining adjustment of the seat back relative to the seat base.

According to the reclining apparatus disclosed in Reference 1, a sub plate holding member is provided to obtain a locked state where the sub plate is connected to the base as a unit and an unlocked state where the sub plate is disconnected from the base. When the sub plate holding member is rotated in a predetermined direction by a manual operation to thereby release an engagement of an engagement projection of the sub plate holding member with the sub plate, the sub plate is disconnected from the base. Then, a locked state of the arm, which is connected to the sub plate by the lock mechanism, relative to the base is released. As a result, the seat back is tiltable forward. Afterwards, when the seatback is pulled back (i.e., returned), the sub plate holding member is rotated in a direction opposite from the aforementioned predetermined direction so that the engagement projection of the sub plate holding member engages with the sub plate. As a result, the sub plate, in addition to the arm, is locked at an original tilt position relative to the base.

In addition, according to a seat reclining apparatus for a vehicle disclosed in JP2002-65388A (hereinafter referred to as Reference 2), a driving force of a drive mechanism on which a speed reduction is conducted is transmitted to a seat back. Specifically, the seat reclining apparatus disclosed in Reference 2 includes lower arms attached to respective side portions of a seat cushion via lower brackets and upper arms attached to respective side portions of the seat back. Each of the lower arms is formed by an annular internal gear portion. Each of the upper arms is formed by an external gear portion that projects from a general flat portion of the upper arm attached to the seat back. The external gear portion of the upper arm has one fewer tooth or less compared to the internal gear portion of the lower arm. The external gear portion of the upper arm partially engages with the internal gear portion of the lower arm.

The seat reclining apparatus disclosed in Reference 2 further includes a pair of wedges and the like by means of which the driving force of the drive mechanism is transmitted to the external gear portion of the upper arm. Then, the external gear portion rotates about an axial center eccentric to a center of a drive shaft. As a result, a meshed position of the external gear portion with the internal gear portion moves sequentially along an inner periphery of the internal gear portion to thereby adjust an angle of the upper arm relative to the lower bracket.

According to the seat reclining apparatus disclosed in Reference 2, the speed reduction of the driving force of the drive mechanism is achieved by the rotation of the external gear portion about a position eccentric to the center of the drive shaft, thereby specifying a position of the seat back. Thus, in a case where the meshed position between the external gear portion and the internal gear portion moves in the circumferential direction by the driving of the drive mechanism (i.e., the actuator), a portion of the internal gear portion with which the external gear portion is meshed is displaced away from the center of the drive shaft.

In addition, according to the seat reclining apparatus disclosed in Reference 2, in a case where the seat back is tilted forward so as to achieve a walk-in function in the same way as the apparatus disclosed in Reference 1, a certain structure is required for supporting a reclining operation mechanism including the actuator, the external gear portion, the internal gear portion and the seat back to be rotatable about an axial center relative to the seat cushion. Then, the entire reclining operation mechanism is tilted forward by a release of a locked state between the seat back and the seat cushion in a case where the seat back is tilted forward.

When the entire reclining operation mechanism is tilted forward, a stopper is required to determine a forward tilt limit. For example, it is considerable to use a structure where a frame of the seat back makes contact with the stopper provided at the seat cushion. However, depending on the tilt angle of the seat back that is specified by the reclining operation mechanism, a contact position of the frame of the seat back with the stopper may vary, which fails to maintain the forward tilt limit at a target forward tilt angle.

In addition, the aforementioned reclining operation mechanism may often include a spring for biasing the seat back in the forward tilt direction. In a case where it is impossible to restrict the forward tilt of the seat back at the target forward tilt angle, an upper surface of the seat cushion strongly makes contact with a front surface of the seat back by the biasing force of the spring before the forward tilt of the seat back is restricted or the forward tilt angle of the seat back is insufficient at a time when the locked state between the seat back and the seat cushion is released.

A need thus exists for a seat reclining apparatus that restricts an operation of a seat back at an appropriate position when the seat back is tilted forward by an operation of an actuator even in a case where a position of the seat back varies relative to an axial center of a tilt operation.

### SUMMARY

According to an aspect of this disclosure, a seat reclining apparatus includes a support frame tiltable about a support axis relative to a first frame constituting a seat cushion, an angle adjustment unit causing a second frame constituting a seat back to tiltably move forward or rearward relative to the support frame by a driving force of an actuator, the second frame being displaced in a direction to approach and separate from the support axis in a case where the second frame tiltably moves forward or rearward relative to the support frame, a lock mechanism selectively operated to an unlocked state where the support frame is allowed to integrally tiltably move with the angle adjustment unit about the support axis and a locked state where the support frame is prohibited to integrally tiltably move with the angle adjustment unit, and a front stopper provided at the first frame to specify a forward tilt limit of the seat back by making contact with a forward tilt contact portion provided at the second frame in a state where the lock mechanism is in the unlocked state, the front stopper including a linearly-shaped contact surface that makes contact with the forward tilt contact portion and that matches or approximates a virtual straight line passing through the support axis.

According to the aforementioned disclosure, a tilt amount, i.e., a tilt angle of the second frame relative to the first frame is selectable by the driving force of the actuator of the angle adjustment unit. In addition, in a case where the seat back is tilted forward while the lock mechanism is in the unlocked state, the forward tilt contact portion of the second frame makes contact with the front stopper, thereby determining the limit of the tilt operation. Further, even when the distance between the second frame and the support axis varies depending on the tilt angle specified by the angle adjustment unit, the forward tilt contact portion makes contact with the front stopper on the virtual line, thereby restraining the tilt angle of the seat back from varying. The seat back is maintained at a position of the forward tilt limit. Accordingly, in a case where the position of the seat back varies relative to the support axis serving as the axial center of the tilt operation of the seat back when the reclining operation of the seat is adjusted by the actuator, the forward operation of the seat back is restricted at an appropriate position in a state where the seat back is tilted forward with the lock mechanism in the unlocked state.

The first frame is constituted by a plate member and the front stopper serves as a reinforcement member connected to the first frame.

Because the front stopper is formed by the reinforcement member, the contact surface of the front stopper is easily linearly formed while the reinforcement of the first frame is conducted.

The seat reclining apparatus further includes a back stopper arranged adjacent to the support frame and specifying a rearward tilt limit of the seat back by making contact with a rearward tilt contact portion provided at the support frame in a state where the lock mechanism is in the unlocked state. The back stopper serves as a connection member connecting the front stopper to the first frame.

In a case where the seat back is tilted rearward with the lock mechanism in the unlocked state, the rearward tilt contact portion formed at the support frame makes contact with the back stopper to thereby determine the rearward operation limit. The back stopper is provided adjacent to the rearward tilt contact portion to thereby restrain an enlargement of the rearward tilt contact portion, i.e., an enlargement of the support frame. In addition, because the back stopper also serves as a member to connect the front stopper to the first frame, an increase of the number of components may be restrained.

The lock mechanism includes a lock arm rotatably supported by the front stopper and being engageable and disengageable relative to the support frame by a rotation of the lock arm.

The angle adjustment unit includes an internal gear formed at the support frame, an external gear formed at a tilt frame connected to the second frame and having fewer teeth compared to the internal gear, and an eccentric member integrally rotating with a drive shaft which is driven to rotate by the actuator, a portion of the internal gear engaging with a portion of the external gear, the external gear being rotatably mounted at an outer periphery of the eccentric member. The seat reclining apparatus further includes a power transmission mechanism moving a meshed position between the external gear and the internal gear along an inner periphery of the internal gear by a rotational force of the eccentric member when the actuator is driven, the power transmission mechanism causing the tilt frame to tilt by an angle corresponding to a difference of a number of teeth between the external gear and the internal gear in a case where the external gear rotates one turn along the inner periphery of the internal gear, the tilt frame being displaced in the direction to approach and separate from the support axis when the meshed position between the external gear and the internal gear moves along the inner periphery of the internal gear.

Accordingly, the tilt frame is displaced in the direction to approach and separate from the support axis, which results in a relatively simple structure with two gears for obtaining a large speed reduction. Specifically, according to the seat reclining apparatus of the disclosure, while the aforementioned power transmission mechanism is used, the variation of the forward operation limit when the seat back is tilted forward may be restrained.

### BRIEF DESCRIPTION OF THE DRAWINGS

The foregoing and additional features and characteristics of this disclosure will become more apparent from the following detailed description considered with the reference to the accompanying drawings, wherein:

Fig. 1 is a side view illustrating a first frame and a second frame of a seat according to an embodiment disclosed here;

Fig. 2 is a plan view illustrating a structure of the first frame;

Fig. 3 is a cross-sectional view taken along line III-III in Fig. 2;

Fig. 4 is a cross-sectional view taken along the line IV-IV in Fig. 2;

Fig. 5 is a cross-sectional view illustrating an angle adjustment unit according to the embodiment disclosed here;

Figs. 6A and 6B are cross-sectional views each illustrating a meshed state between an internal gear and an external gear according to the embodiment disclosed here;

Fig. 7 is a side view illustrating a lock mechanism in a locked state according to the embodiment disclosed here;

Fig. 8A is a side view illustrating a state where a front stopper and a forward tilt contact portion make contact with each other and Fig. 8B is a side view illustrating a state where a back stopper and a rearward tilt contact portion make contact with each other according to the embodiment disclosed here;

Fig. 9 is an exploded perspective view illustrating a structure of the right angle adjustment unit; and

Fig. 10 is an exploded perspective view illustrating a structure of the left angle adjustment unit.

### DETAILED DESCRIPTION

An embodiment disclosed here will be explained with reference to the attached drawings.

### [Overall structure]

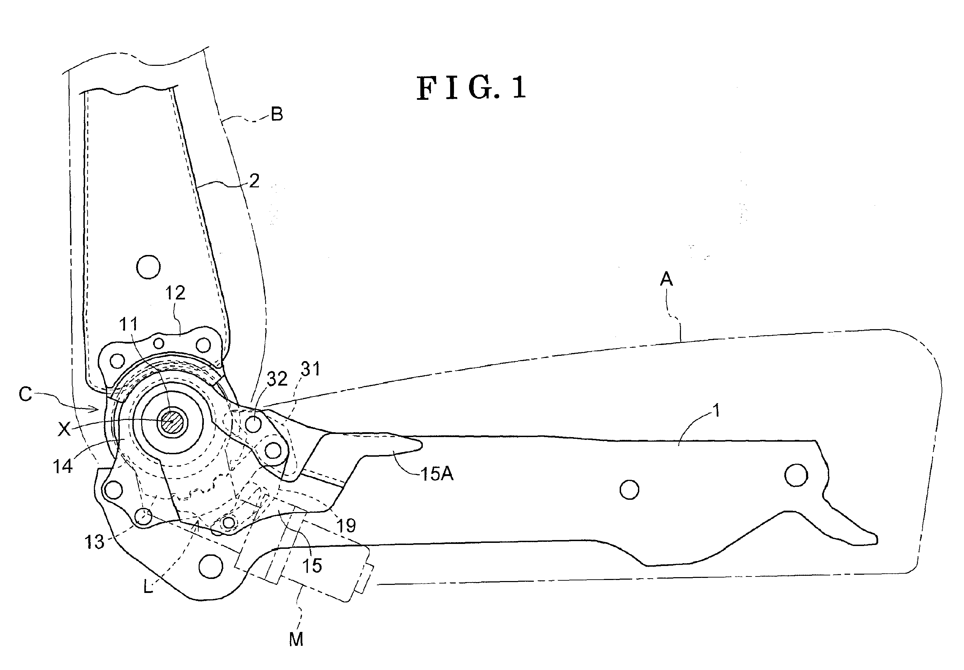

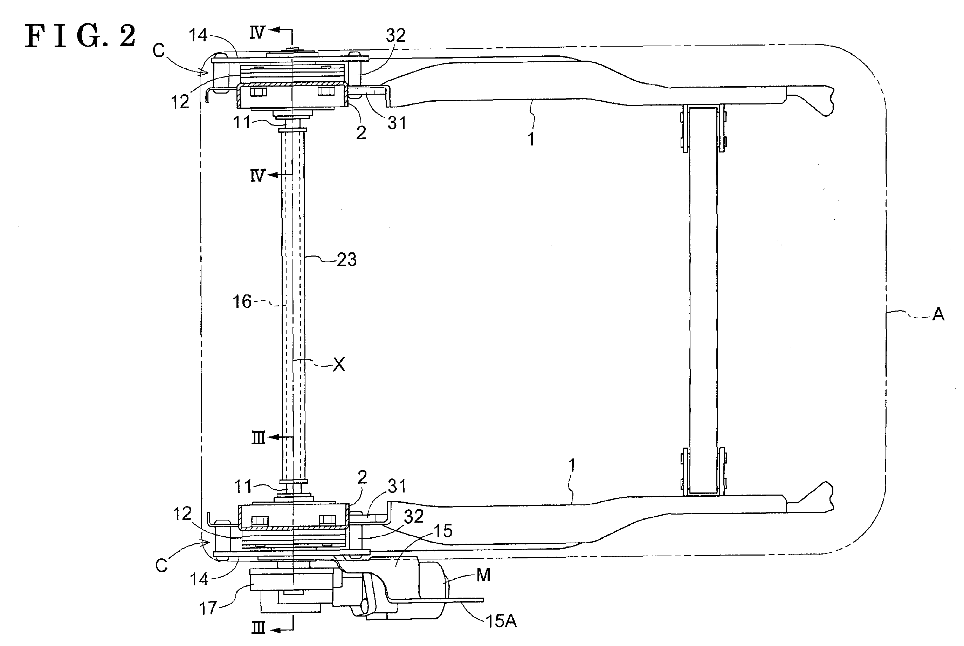

As illustrated in Figs. 1 and 2, a reclining-type seat for a vehicle such as a passenger car includes a seat cushion A of which a center portion in a width direction of the vehicle is formed by a seated surface and a seat back B attached at a rear edge of the seat cushion A so as to be tiltable in a longitudinal direction of the vehicle. In the embodiment, directions and orientations such as left, right, front, rear, top, and bottom correspond to those when viewed from a passenger seated on the seat for a vehicle.

The seat cushion A includes two first frames (i.e., left and right first frames) 1 constituting left and right side portions of the seat cushion A. The seat back B includes two second frames (i.e., left and right second frames) 2 constituting left and right side portions of the seat back B. The first frames 1 and the second frames 2 are tiltably connected to each other at left and right sides of the seat, respectively, about a support axis X. The seat also includes two angle adjustment units (i.e., left and right angle adjustment units) C at connecting portions between the first frames 1 and the second frames 2 respectively so as to arbitrarily specify a tilt amount (i.e., a tilt angle) of the second frames 2 relative to the first frames 1 by means of a driving force of a single actuator. Further, the seat includes two lock mechanisms (i.e., left and right lock mechanisms) L that achieve a locked state where each of the second frames 2 is maintained at a fixed tilt angle relative to each of the first frames 1 and an unlocked state where each of the second frames 2 is tiltable relative to each of the first frames 1. A seat reclining apparatus according to the present embodiment is constituted by a structure where the seat is tiltable by the first frames 1 and the second frames 2, the angle adjustment units C, and the lock mechanisms L.

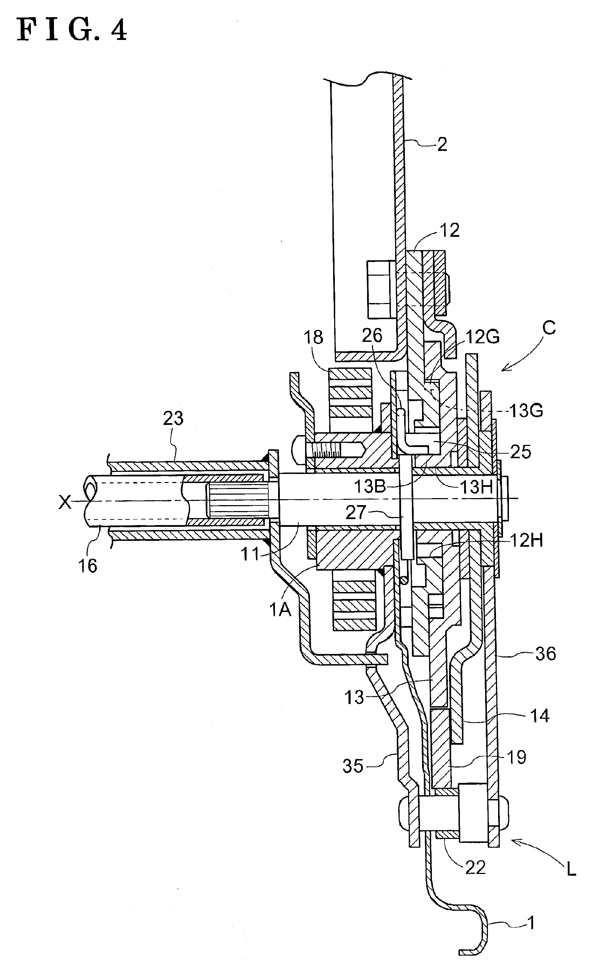

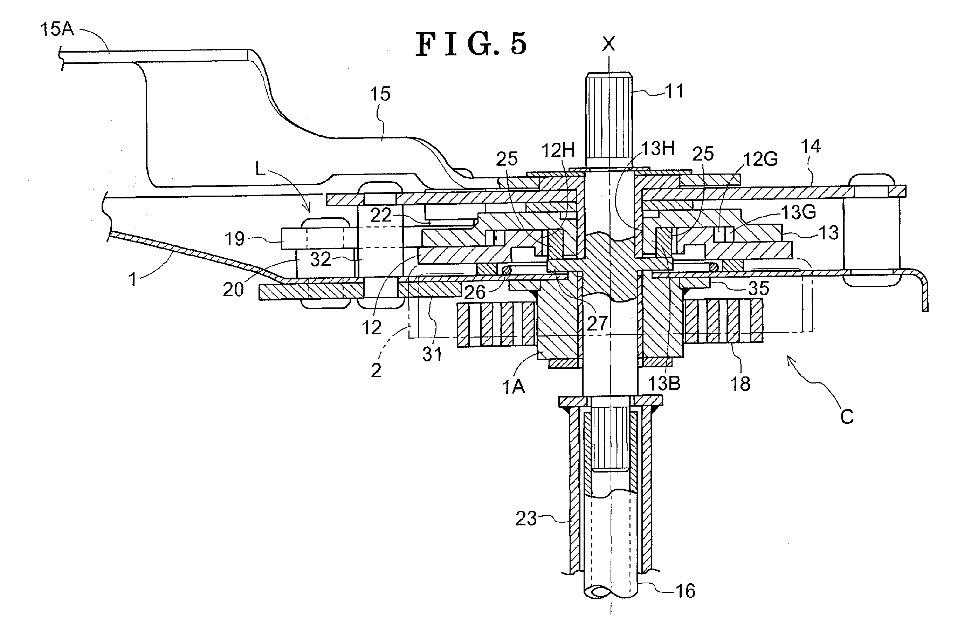

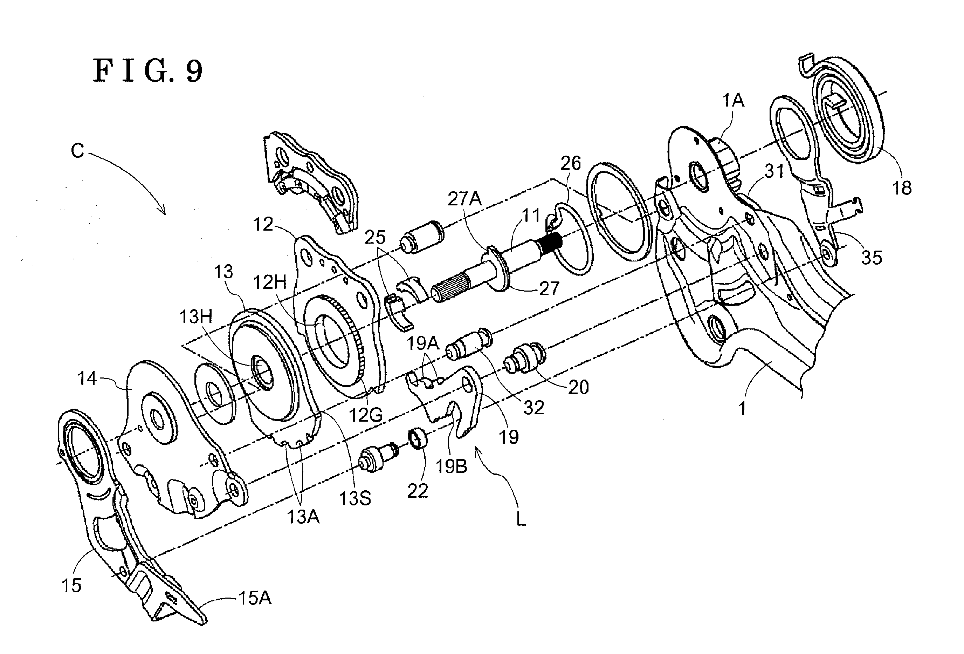

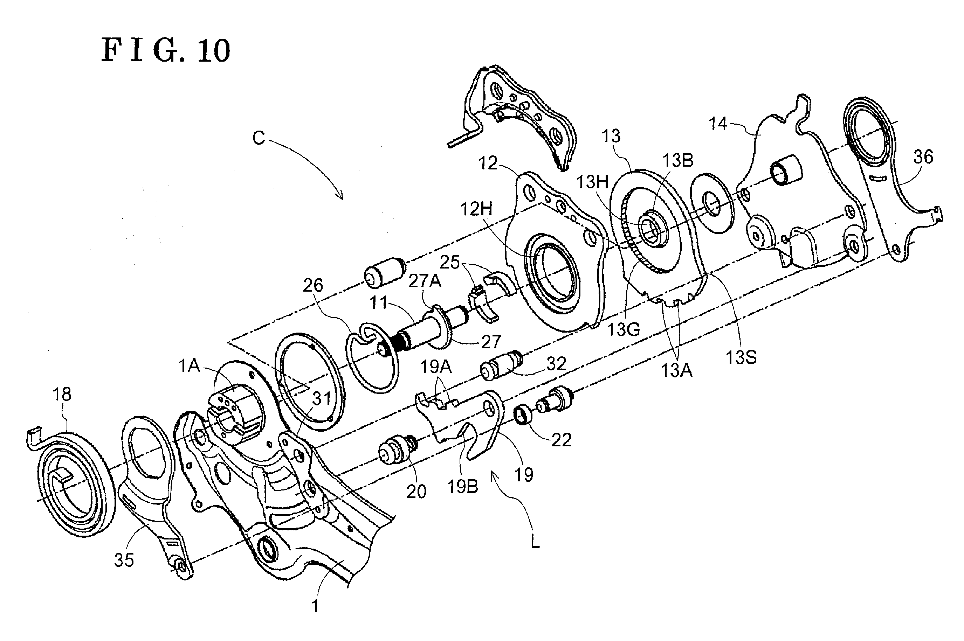

As illustrated in Figs. 1 to 5, 9, and 10, each of the angle adjustment units C includes an upper gear plate 12 serving as a tilt frame, a lower gear plate 13 serving as a support frame, a fixed plate 14 and a lock release arm 15 that are arranged in this order along an axial center X (which is equal to the support axis X) of each drive shaft 11 (i.e., each of left and right drive shafts) rotatably supported by the first frame 1. According to the present embodiment, the lock release arm 15 is provided at only one of the angle adjustment units C (for example, at the right angle adjustment unit C).

Inner ends of the left and right drive shafts 11 are connected to an intermediate shaft 16. An outer end of one of the drive shafts 11 is provided with a first power transmission mechanism where a gear reduction mechanism 17 performs a speed reduction on a driving force of an electric motor M serving as the actuator and performs a power transmission of the resulting driving force.

Left and right torsion springs 18, each having a coil shape, are provided at facing portions of the left and right first frames 1. One end of each of the torsion springs 18 engages with a support block 1A of the first frame 1 while the other end of each of the torsion springs 18 engages with the upper gear plate 12. As a result, the second frames 2 are biased forward.

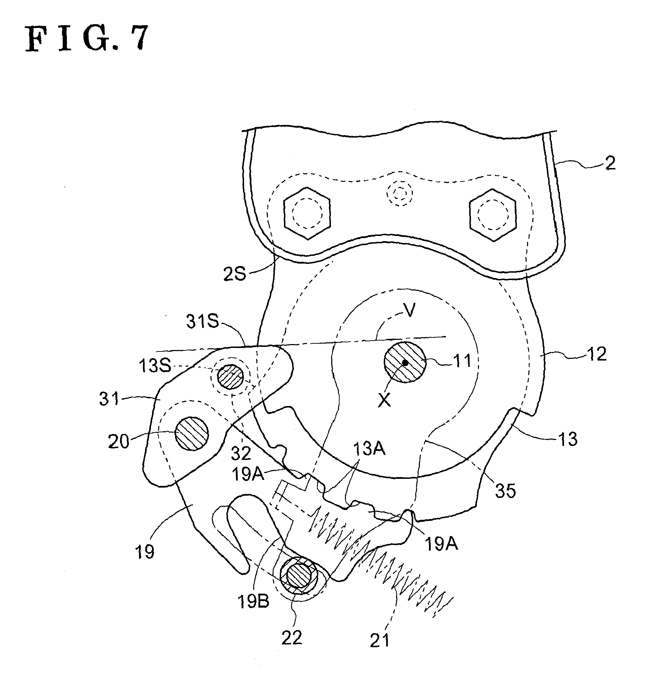

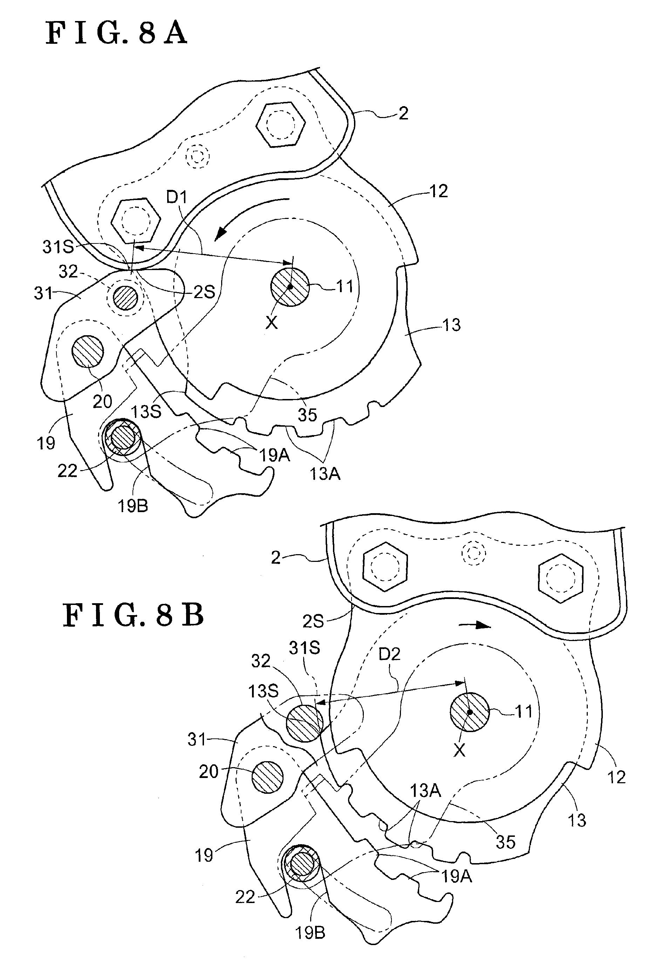

As illustrated in Figs. 7, 8A and 8B, each of the lower gear plates 13 includes multiple lock recess portions 13A at a lower side. Each lock arm (i.e., each of left and right lock arms) 19 including multiple protruding portions 19A engageable and disengageable relative to the multiple lock recess portions 13A is supported at a side surface of each of the left and right first frames 1 so as to be rotatable about a lock support shaft 20. The lock arm 19 includes a guide portion 19B having a cutout shape along which a control roller 22 is movable. Each of the aforementioned lock mechanisms L is obtained by engagement and disengagement between the lock arm 19 and the lower gear plate 13.

The lock release arm 15 is movably supported about the support axis X at an outer wall portion of one of the fixed plates 14, specifically, the right fixed plate 14. Then, a linking arm 35 is provided at a position facing the lock release arm 15 across the right first frame 1. The linking arm 35 is movable about the support axis X. The right control roller 22 is supported at both ends by the lock release arm 15 and the right linking arm 35. An arm portion 15A of the lock release arm 15 is provided with a grip of which a user takes hold.

An operation arm 36 is movably supported about the support axis X at an outer wall portion of the other of the fixed plates 14, specifically, the left fixed plate 14. The operation arm 36 is provided at a position symmetrical to a position where the lock release arm 15 is provided. The left control roller 22 is supported at both ends by the operation arm 36 and the left linking arm 35.

The left and right linking arms 35 are connected to a linking shaft 23 within which the intermediate shaft 16 is coaxially fitted. The left linking arm 35 and the operation arm 36 receive a biasing force from a lock spring 21 (see Fig. 7) to thereby maintain the control roller 22 at a locked position.

The guide portion 19B of each of the lock arms 19 includes a lock area and an unlock area continuously formed as illustrated in Figs 7, 8A and 8B. Specifically, in a case where the control roller 22 is positioned at the lock area as illustrated in Fig. 7, the protruding portions 19A engage with the respective lock recess portions 13A. In a case where the control roller 22 is positioned at the unlock area as illustrated in Figs. 8A and 8B, the protruding portions 19A of the lock arm 19 disengage from the respective lock recess portions 13A.

When the arm portion 15A of the lock release arm 15 is manually operated upward in a state where each of the lock mechanisms L is in the locked state, i.e., the protruding portions 19A engage with the respective lock recess portions 13A, the control roller 22 moves along the guide portion 19B from the lock area to the unlock area. Because the left and right linking arms 35 are connected to each other by means of the linking shaft 23, the left and right control rollers 22 both move to the respective unlock areas from the respective lock areas at the same time. As a result, the left and right lock arms 19 are allowed to move in a direction where the locked states of both of the lock mechanisms L are released. Then, as illustrated in Figs. 8A and 8B, the protruding portions 19A of each of the lock arms 19 disengage from the respective lock recess portions 13A of each of the lower gear plates 13, thereby bringing each of the lock mechanisms L to the unlocked state.

Each of the lock mechanisms L is brought to the unlocked state so that the seat back B is tilted forward by the biasing force of the left and right torsion springs 18. In addition, in a case where a force to tilt the seat back B rearward is applied thereto when each of the lock mechanisms L is brought to the unlocked state, the seat back B is tilted rearward against the biasing force of the left and right torsion springs 18.

### [Angle adjustment unit]

The angle adjustment unit C transmits the driving force of the electric motor M from the gear reduction mechanism 17 to a second power transmission mechanism serving as a power transmission mechanism provided between the upper gear plate 12 and the lower gear plate 13. Then, the speed reduction is conducted on the driving force by the second power transmission mechanism to thereby tilt the upper gear plate 12 relative to the lower gear plate 13.

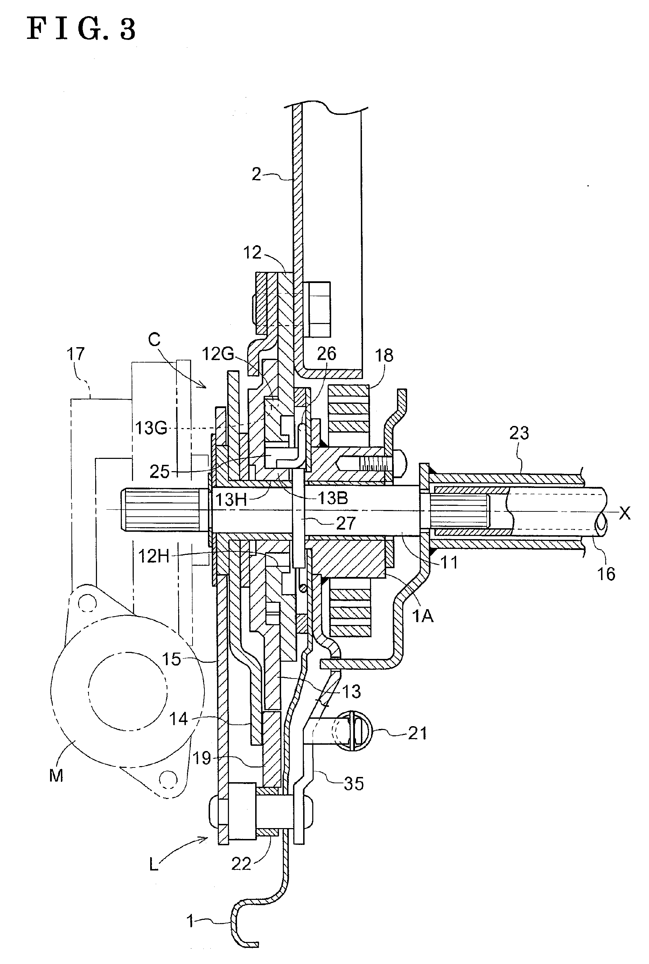

Specifically, as illustrated in Figs. 3 to 6, 9 and 10, each of the lower gear plates 13 is formed by a circular-shaped gear accommodating portion at a center. The gear accommodating portion is formed by press working, or the like, and is dent in a thickness direction of the lower gear plate 13. A support boss portion 13B is formed at a center of the gear accommodating portion by burring, or the like so as to protrude along the support axis X. A bore 13H is formed at an inner periphery of the support boss portion 13B. In addition, an internally toothed gear (internal gear) 13G is integrally formed at an inner periphery of the gear accommodating portion of the lower gear plate 13 so as to be coaxial with the support boss portion 13B.

Each of the upper gear plates 12 is formed by a circular-shaped bulged portion at a center. The bulged portion is formed by a press working, or the like, and is dent in a thickness direction of the upper gear plate 12. A circular-shaped bore 12H penetrates through a center of the bulged portion. In addition, an externally toothed gear (external gear) 12G is integrally formed at an outer periphery of the bulged portion of the upper gear plate 12 so as to be coaxial with the bore 12H. The external gear 12G has one fewer tooth or less compared to the internal gear 13G.

A pair of wedge pieces 25 is arranged at an outer periphery of the support boss portion 13B so as to be slidable on the outer periphery thereof in a circumferential direction. The wedge pieces 25 are examples of eccentric members. Each of the wedge pieces 25 is integrally formed by a projecting portion 25A along the support axis X. A loop-shaped spring 26 is disposed to bias the pair of wedge pieces 25 to separate them each other in the circumferential direction of the support boss portion 13B. A cam plate 27 including an engagement recess portion 27A that makes contact with the projecting portions 25A of the pair of wedge pieces 25 so as to apply a rotational force thereto is provided at each of the drive shafts 11. The pair of wedge pieces 25 collectively forms an outer peripheral shape that partially constitutes a periphery eccentric to the axial center X of each of the drive shafts 11 when viewed in a direction along the axial center X. The pair of wedge pieces 25 is arranged to make contact with an inner periphery of the bore 12H of each of the upper gear plates 12.

Accordingly, a center of the external gear 12G formed at each of the upper gear plates 12 is positioned eccentric to the axial center X of the drive shaft 11. Consequently, a portion of the internal gear 13G of each of the lower gear plates 13 is meshed with a portion of the external gear 12G of each of the upper gear plates 12.

In the aforementioned arrangement between the internal gear 13G and the external gear 12G, in a case where each of the drive shafts 11 is driven to rotate, end faces of the engagement recess portion 27A of the cam plate 27 make contact with the respective projecting portions 25A of the pair of wedge pieces 25. The rotational force of the drive shaft 11 is transmitted to the pair of wedge pieces 25 via the contacting portion between the cam plate 27 (i.e., the engagement recess portion 27A) and the pair of wedge pieces 25, thereby slidably rotating the pair of wedge pieces 25 on the outer periphery of the support boss portion 13B in the circumferential direction. According to such rotation of the pair of wedge pieces 25, the center of the external gear 12G of the upper gear plate 12 moves along a circumferential locus so as to be away from the axial center X of the drive shaft 11. While the center of the external gear 12G is moving, the meshed position between the external gear 12G and the internal gear 13G is moving along the inner periphery of the internal gear 13G. As a result, the external gear 12G tiltably moves relative to the internal gear 13G.

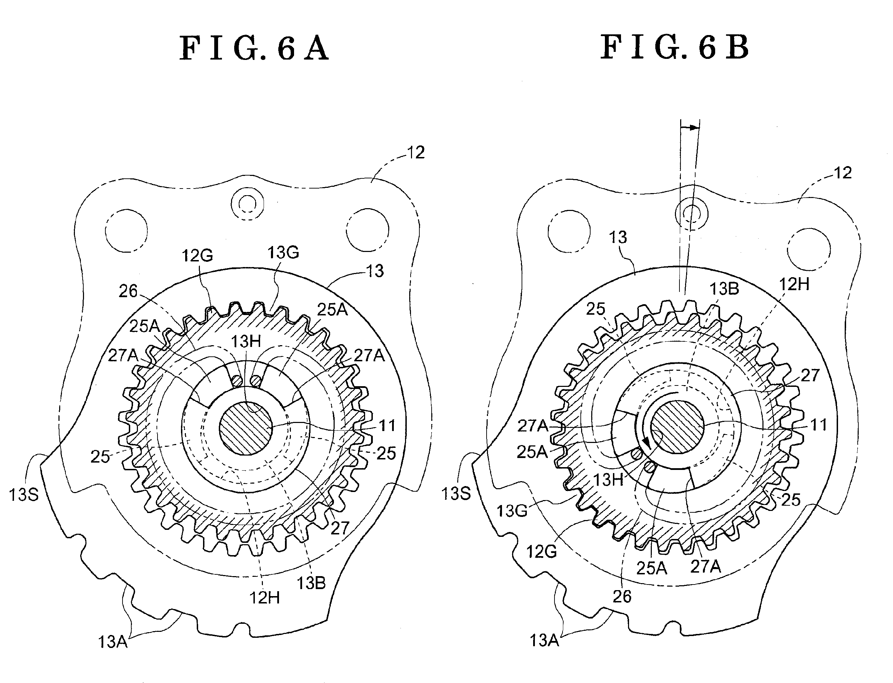

According to a principle of the speed reduction of the second power transmission mechanism, because the external gear 12G has one fewer tooth or less compared to the internal gear 13G, the external gear 12G rotates one turn on the inner periphery of the internal gear 13G and the internal gear 13G rotates by an angle (i.e., an angle shown by an arrow in Fig. 6B) corresponding to a difference of the number of teeth between the internal gear 13G and the external gear 12G when the drive shaft 11 rotates one turn, for example. As a result, a large speed reduction by a large reduction gear ratio is achieved. As a result, according to the second power transmission mechanism of the present embodiment, the second frames 2 move tiltably along with rotations of the drive shafts 11, thereby arbitrarily specifying the angle of the seat back B relative to the seat cushion A.

Specifically, according to each of the angle adjustment units C of the present embodiment, the meshed position between the external gear 12G and the internal gear 13G moves along the inner periphery of the internal gear 13G. Thus, each of the second frames 2 in addition to each of the upper gear plates 12 including the external gear 12G is displaced in a direction to approach and separate from the support axis X.

### [Tilt limiting mechanism]

In a case where the left and right lock arms 19 are operated in a direction where the locked state of each of the lock mechanisms L is released by an operation of the lock release arm 15 so that the lock mechanism L is brought to the unlocked state, each of the upper gear plates 12 and each of the lower gear plates 13 are connected to each other via the second power transmission mechanism so as to be integrally tiltable about the support axis X.

Thus, in a case where the lock mechanisms L are each brought to the unlocked state while a user is not seated on the seat, the upper gear plates 12 and the lower gear plates 13 are integrally tilted forward to the utmost limit about the support axis X by the biasing force of the torsion springs 18. Then, front stoppers 31 that determine a forward tilt limit of the upper gear plates 12 and the lower gear plates 13 are provided at the respective first frames 1. In addition, forward tilt contact portions 2S that make contact with the front stoppers 31 are formed at the respective second frames 2.

As illustrated in Fig. 7, each of the front stoppers 31 is made of a plate member fixed to the first frame 1 by spot welding, or the like. The front stoppers 31 having the plate shape also serve as reinforcements of the first frame 1. The front stopper 31 includes a contact surface 31 S at an upper end linearly and horizontally extending. A virtual straight line V obtained by an extension of the contact surface 31 S is configured to pass through a vicinity of the support axis X. It is desirable that the virtual straight line V passes through the support axis X, however, the virtual straight line V is still effective even when passing through the vicinity of the support axis X.

The forward tilt contact portions 2S constitute portions of the second frames 2. Each of the forward tilt contact portions 2S does not include a specific structure for a contact according to the present embodiment. However, for example, a projection, a contact member, or the like may be formed at the forward tilt contact portion 2S for the contact with the front stopper 31.

According to the seat reclining apparatus of the present embodiment, the seat back B is also tiltable forward by the driving force of the electric motor M of the angle adjustment unit C. In this case, an angle achieved immediately before each of the forward tilt contact portions 2S makes contact with each of the front stoppers 31 is specified to be a forward operation limit of the seat back B. When the seat back B reaches the forward operation limit, the electric motor M is automatically stopped by an electric control. In addition, the seat back B may be configured to be tilted rearward so as to be positioned substantially horizontally by the use of the driving force of the electric motor M. Such configuration is realized by an operation of a switch, for example. When the seat back B reaches a rearward operation limit, the electric motor M is automatically stopped by the electric control.

When the seat back B is tilted to the forward operation limit, a space in the rear of the seat back B is open. Therefore, for example, a wide space is ensured for a user to get in or out of a seat arranged behind the present seat to thereby ease a walk-in operation, and the like.

In a case where the angle adjustment units C are each brought in the unlocked state when the user, seated on the seat, leans against the seat back B, the upper gear plates 12 and the lower gear plates 13 are integrally tilted rearward to the utmost limit about the support axis X. In order to determine a rearward tilt limit as illustrated in Figs. 8A and 8B, back stoppers 32 are provided at the first frames 1 respectively at positions adjoined to the lower gear plates 13. Rearward tilt contact portions 13S making contact with the back stoppers 32 are formed at the respective lower gear plates 13.

Each of the back stoppers 32 having a column shape is provide at the first frame 1 in a projecting manner. The back stopper 32 also serves as a member supporting the fixed plate 14 to the first frame 1 and further serves as a connection member connecting the front stopper 31 to the first frame 1 (see Fig. 1). The rearward tilt contact portion 13S is a portion of the end surface of the lower gear plate 13. The rearward tilt contact portion 13S does not include a specific structure for a contact according to the present embodiment. Alternatively, a member for the contact may be separately provided from the lower gear plate 13.

As illustrated in Figs. 8A and 8B, when assuming that a distance between the contact position between the front stopper 31 and the forward tilt contact portion 2S and the support axis X is a first distance D1 and a distance between the contact position between the back stopper 32 and the rearward tilt contact portion 13S and the support shaft X is a second distance D2, the first distance D1 is greater than the second distance D2 (i.e., D1 >D2). A value of the first distance D1 varies depending on the tilt angle of the seat back B relative to the seat cushion A by the angle adjustment units C as mentioned above. However, the relationship between the first distance D1 and the second distance D2, i.e., D1>D2, is maintained. At this time, the relationship of D1>D2 is an example of the present embodiment and may not be necessarily achieved.

According to the aforementioned structure, the position of the forward tilt contact portion 2S formed at each of the second frames 2 is displaced relative to the support axis X in the direction to approach and separate therefrom by the operation of the angle adjustment units C and therefore the contact position of the forward tilt contact portion 2S relative to the front stopper 31 varies upon the forward tilt of the seat back B with the lock mechanism L in the unlocked state. However, the variation of the contact position of the forward tilt contact portion 2S relative to the front stopper 31 corresponds to the direction to approach and separate from the support axis X. Thus, the tilt angle of the seat back B is prevented from varying to thereby retain the seat back B at a desirable angle.

That is, the tilt amount, i.e., the tilt angle of the second frames 2 relative to the first frames 1 is selectable by the driving force of the electric motor M of the angle adjustment unit C. In addition, in a case where the seat back B is tilted forward while the lock mechanisms L are each in the unlocked state, the forward tilt contact portions 2S of the second frames 2 make contact with the respective front stoppers 31, thereby determining the limit of the tilt operation. Further, even when the distance between each of the second frames 2 and the support axis X varies depending on the tilt angle specified by the angle adjustment units C, the forward tilt contact portions 2S make contact with the respective front stoppers 31 on the respective virtual lines V, thereby restraining the tilt angle of the seat back B from varying. The seat back B is maintained at a position of the forward tilt limit. Accordingly, in a case where the position of the seat back B varies relative to the support axis X serving as the axial center of the tilt operation of the seat back B when the reclining operation of the seat is adjusted by the electric motor M, the forward operation of the seat back B is restricted at an appropriate position in a state where the seat back B is tilted forward with the lock mechanisms L each in the unlocked state.

## Claims

1. A seat reclining apparatus comprising:
a support frame (13) tiltable about a support axis (X) relative to a first frame (1) constituting a seat cushion (A);
an angle adjustment unit (C) causing a second frame (2) constituting a seat back (B) to tiltably move forward or rearward relative to the support frame (13) by a driving force of an actuator (M), the second frame (2) being displaced in a direction to approach and separate from the support axis (X) in a case where the second frame (2) tiltably moves forward or rearward relative to the support frame (13);
a lock mechanism (L) selectively operated to an unlocked state where the support frame (13) is allowed to integrally tiltably move with the angle adjustment unit (C) about the support axis (X) and a locked state where the support frame (13) is prohibited to integrally tiltably move with the angle adjustment unit (C); and
a front stopper (31) provided at the first frame (1) to specify a forward tilt limit of the seat back (B) by making contact with a forward tilt contact portion (2S) provided at the second frame (2) in a state where the lock mechanism (L) is in the unlocked state, the front stopper (31) including a linearly-shaped contact surface (31 S) that makes contact with the forward tilt contact portion (2S) and that matches or approximates a virtual straight line (V) passing through the support axis (X).

2. The seat reclining apparatus according to claim 1, wherein the first frame (1) is constituted by a plate member and the front stopper (31) serves as a reinforcement member connected to the first frame (1).

3. The seat reclining apparatus according to either one of claims 1 and 2, further comprising a back stopper (32) arranged adjacent to the support frame (13) and specifying a rearward tilt limit of the seat back (B) by making contact with a rearward tilt contact portion (13S) provided at the support frame (13) in a state where the lock mechanism (L) is in the unlocked state, the back stopper (32) serving as a connection member connecting the front stopper (31) to the first frame (1).

4. The seat reclining apparatus according to any one of claims 1 through 3, wherein the lock mechanism (L) includes a lock arm (19) rotatably supported by the front stopper (31) and being engageable and disengageable relative to the support frame (13) by a rotation of the lock arm (9).

5. The seat reclining apparatus according to any one of claims 1 through 4, wherein the angle adjustment unit (C) includes an internal gear (13G) formed at the support frame (13), an external gear (12G) formed at a tilt frame (12) connected to the second frame (2) and having fewer teeth compared to the internal gear (13G), and an eccentric member (25) integrally rotating with a drive shaft (11) which is driven to rotate by the actuator (M), a portion of the internal gear (13G) engaging with a portion of the external gear (12G), the external gear (12G) being rotatably mounted at an outer periphery of the eccentric member (25), and
the seat reclining apparatus further comprises a power transmission mechanism moving a meshed position between the external gear (12G) and the internal gear (13G) along an inner periphery of the internal gear (13G) by a rotational force of the eccentric member (25) when the actuator (M) is driven, the power transmission mechanism causing the tilt frame (12) to tilt by an angle corresponding to a difference of a number of teeth between the external gear (12G) and the internal gear (13G) in a case where the external gear (12G) rotates one turn along the inner periphery of the internal gear (13G), the tilt frame (12) being displaced in the direction to approach and separate from the support axis (X) when the meshed position between the external gear (12G) and the internal gear (13G) moves along the inner periphery of the internal gear (13G).
